# EUROPEAN PATENT SPECIFICATION

(11) **EP 1 522 047 B1**
(45) Date of publication and mention of the grant of the patent: **16.01.2008**
(21) Application number: 03735896.7
(22) Date of filing: 24.06.2003
(51) Int. Cl.: G06T 5/20, H04N 9/04

(54) **METHOD AND APPARATUS FOR SIGNAL PROCESSING, COMPUTER PROGRAM PRODUCT, COMPUTING SYSTEM AND CAMERA**
METHODE UND APPARAT ZUR SIGNALVERARBEITUNG, COMPUTERPROGRAMMPRODUKT, COMPUTERSYSTEM UND KAMERA
PROCEDE APPAREIL DE TRAITEMENT DE SIGNAUX, PROGRAMME INFORMATIQUE, SYSTEME INFORMATIQUE ET CAMERA

(30) Priority: 04.07.2002 EP 02077691
(43) Date of publication of application: 13.04.2005
(73) Proprietor: Koninklijke Philips Electronics N.V., 5621 BA Eindhoven (NL)
(72) Inventor: JASPERS, Cornelis, A., M., NL-5656 AA Eindhoven (NL)
(74) Representative: Eleveld, Koop Jan
(86) International application number: PCT/IB2003/002651
(87) International publication number: WO 2004/006182

(56) References cited:
- WO-A-99/04555
- WO-A-99/46730
- US-A1- 2002 003 578
- US-A1- 2002 025 069
- US-A1- 2002 039 142

## Description

The invention regards a method according to the preamble of claim 1.

US 2002/003578 describes various forms of image processing that may be applied in digital still image cameras. These include color interpolation in a color filtered array, to regenerate missing color data. The document also describes edge enhancement. In order to enhance edges a Laplace operator is applied to a luminance signal and the resulting signal is added near edges.

Digital cameras based on digital signal image sensoring of e. g. video and still images may be advantageously equipped with an image sensor comprising a red-green-blue (RGB) Bayer-color-filter-array. In such RGB Bayer-color-filter array each pixel senses a red, green or blue primary color in a redefined pattern. This pattern is built up of alternating green/red columns and green/blue columns. Such a sensor may have a limited resolution in comparison with a camera using a separate image sensor for each primary color. However, a camera with three image sensors has three times as much pixels contributing to the resolution than a single RGB Bayer-sensor. Using three sensors is for most applications disadvantageous due to cost and size requirements of the application. On the other hand, when using one single image sensor to sense all three primary colors red, green and blue within one single array, advantageously in a RGB Bayer-color-filter array, it is necessary to reconstruct missing pixels of certain colors to process a consistent whole of a picture. Due to the RGB Bayer-structure, different Nyquist-domains respectively with regard to green, red and blue colors result in a color dependent resolution and possibly aliasing patterns. Nevertheless the RGB Bayer-structure is one of the best performing signal color arrays.

Several interpolation schemes may be provided to increase signal quality. In W099/04555 a conventional method of interpolation is described in rather general terms wherein an intermediate color signal is interpolated at positions where no signal of a given color is present and an average of a given color is generated.

A further method for signal processing uses a more advantageous interpolation scheme as described in the W099/04555 and in the European patent application with the application number WO02/063888. However such methods still suffer from e. g. aliasing of a free luminance signal or further signal distortion. Such signal distortion especially results in an erroneous generation of false colors in an image.

In WO 99/04555 a green reconstruction method a for RGB Bayer image sensors has been described merely concerns the green color reconstruction. The red and blue colors remain reconstructed in a conventional way. Merely a missing green pixel is reconstructed. The reconstruction of the missing green pixel is carried out by means of a median filter sorting three specific variables: two of them are derived from the green color, the third one from the red or blue color. A disadvantage of this method is, that for high saturated colored edges artifacts are introduced which look like the border of a postage stamp. The algorithm disclosed in WO 99/04555 will be referred to as the smartgreenl-algorithm. The smartgreenl-algorithm is based on the concept that resolution losses are best observed at high frequencies near white scene parts and less good near colored parts.

Keeping this in mind, the contribution of the red and blue pixels is used to help determining the reconstruction value of the missing green pixels. The object of the smartgreenl- reconstruction is to maximize the resolution of the green color. For this purpose the median filter algorithm is applied as follows: naturally, the location occupied by a red (R) or blue(B) pixel is a location of a missing green pixel. In the smartgreen1-reconstruction-algorithm a center value of a 3 x 3 pixel array, also called the median value, is applied for the reconstruction of the missing green pixels. Consequently, the simple median filter for green merely replaces a conventional interpolation concept of green reconstruction, whereas the conventional red and blue reconstruction method is maintained to be a simple interpolation.

Luminance filtering, color filtering and contour filtering is also restricted to the filtering for green. False color detection is merely based on a conventional interpolation concept of green reconstruction, and also the conventional red and blue reconstruction is maintained to be a simple interpolation.

Such smartgreenl-reconstruction method improves the resolution of the green pixels in the horizontal and vertical direction with the aid of the information of a red and/or blue pixel. This conventional method relies on interpolating the color sample to be interpolated in dependence upon neighboring color samples of the same color and a differently colored sample merely from the same location. As a consequence, the reconstructed signal suffers from red-and/or blue-colored aliasing. Vertical and horizontal colored edges suffer from a green intensity modulation in the respective direction resembling the border of a postage stamp.

Further improvement as outlined in WO02/063888, herein referred to as the smartgreen2-reconstruction-algorithm, was able to significantly improve resolution but not to remove the mentioned disadvantages of signal distortion and signal aliasing. In particular at edges and high frequencies some signal distortion is still visible such as alternating colors with neighboring pixels. Artifact black and also white dots are generated erroneously.

Parallel processing of a color-and a contour-reconstruction filter in principle is known from W099/04555. However, this conventional concept suffers from the same disadvantageous as outlined above.

This is where the invention comes in, the object of which is to specify a method and apparatus for signal processing, and also a computer program product for signal processing, a computing system and a camera adapted for signal processing such that signal quality is improved. In particular, a signal should be improved with regard to signal distortion, and aliasing, but the signal should still provide sufficient resolution.

As regards, the method the object is achieved by a method as mentioned in the introduction which is characterized by the characterizing part of claim 1.

As regards the apparatus the object is achieved by an apparatus according to claim 14.

The term pixel herein is used in particular to refer to the value of a color sample in the signal.

The present invention has arisen from the idea to provide a concept of flexible design for the reconstruction of images. The main idea is to provide concept of reconstruction based on a white compensated luminance-reconstruction. This idea basically is realized by parallel processing of color-reconstruction and contour-reconstruction. Weighting the red-and/or blue-pixel with a green-parameter is a further major improvement, whereas prior art concepts merely rely on the reconstruction of a missing green-pixel. The proposed reconstruction-filters are designed to be applied to an array of pixels of predetermined array size. Consequently filtering is performed in an advantageous way on this array. Whereas conventional methods rely on simple interpolation in dependence upon neighboring samples or a sample of the same location, the proposed concept provides specifically adapted reconstruction-filters which take into account all pixels of the array.

Parallel contour processing for Bayer image sensors allows to use the green signal from the image sensor for generating a two-dimensional contour-signal in parallel with the RGB-color-reconstruction. Advantageously no extra row delays are needed as it is the case with serial contour processing. Further advantages will be outlined in chapter 2 of the detailed description.

In a further configuration advantageously a contour-reconstruction-filter is applied, in particular parallel to the luminance-reconstruction-filter and their reconstruction signals are added. The contour-reconstruction-filter advantageously is applied to an array-size of 5x5, in particular to an array-size of 4x4 or 6x6. By the proposed method advantageously the transfers of the red, green and blue reconstruction-filters are matched in such a way that less or no greenish interferences will occur at higher diagonal frequencies as it is the case with conventional filters. The filters are free of post-stamp-border looking artifacts and free of color- and luminance-edges. Further all generated luminance signals are free of aliasing and distortion by means of the so called luminance-white-compensation in combination with the filter weights.

The proposed method offers the possibility to apply several aliasing free contour-filters which may be chosen as a function of the optical transfer of the camera. In particular an array size to which the contour-reconstruction-filter is applied to exceeds the size of an array a color-construction-filter is applied to. Advantageously the contour-reconstruction-filter is applied to an array size of 4x4 or 6x6.

In a further preferred configuration the reconstruction-filter is a luminance-reconstruction-filter and the pixels of the array are added together in one white pixel being the output-pixel. Most preferred the green-parameter or a number of green parameters are chosen in dependence of a sensor matrix of the image sensor. Moreover the green parameter or a number thereof may be chosen in dependence of an optical transfer of an optical system providing an image signal to the image sensor. Thereby the RGB-color-signals are advantageously reconstructed with filter weights that can be chosen as a function of an optical transfer of a camera in combination with the heaviness of the sensor matrix. Most preferred two green parameters are provided.

The basic concept of luminance reconstruction as described above implying with one or more of the preferred configurations is in the following referred to as the "white compensated luminance-reconstruction" for RGB-Bayer-image-sensors, or simply "RGB-reconstruction". The green-parameters are also referred to as "smartgreen-parameters". Using the smartgreen-parameters also with a red-and/or blue-pixel as defined by the proposed method and the further developed configurations thereof will be referred to as the "smartgreen3"-reconstruction method. Particular ways of determining the green-parameters are also described in WO 99/04555 and EP 01200422.2 and may be applied and used within smartgrecn3 as well.

The specific kind of arranging filters and filtersize of the proposed method results in an aliasing free signal and in particular also free from green-green differences. Details will be further outlined in chapters 2 and 3 of the detailed description with regard to preferred embodiment and with reference to the drawing.

The proposed white compensated concept advantageously results in an aliasing free luminance signal, even at the multiples of the sample frequency in case of a camera without optical low pass filter. Moreover this white compensated luminance signal is free of signal distortion. The basic method and apparatus as proposed are adapted to offer a broad and flexible extension. It is possible to offer a variety of several reconstruction-filters which may be chosen and adjusted e.g. in dependence of an optical transfer of an optical system and/or a sensor matrix of an image sensor. The proposed method and apparatus are capable to maintain a rather independency of optical low pass filters. This is particular advantageous as camera designs of potential customers may vary. The proposed method and apparatus are capable to implement adjustable false-color-filters in various ways and in a simple manner as will be outlined below.

Continued developed configurations of the method are described in the dependent method claims. The proposed apparatus may be improved with respective means for executing the method.

In particular it is preferred that a center-output-pixel of a second filter subsequent to a first filter is positioned in phase with the output-pixel, in particular the center-output-pixel is centered at the same center position of the array as the output-pixel. Most will be further described below.

Specifically a luminance-reconstruction-filter is applied to pixels of an array having an array size of 2x2 or 4x4 or 6x6 or larger if preferred. In a particular preferred configuration the luminance-reconstruction-filter is applied to an array size of 2x2 or 4x4. The filter size may be chosen as a function of the optical transfer. Also the weights for the respective filter may he chosen differently.

Additionally a low pass luminance signal may advantageously be generated by low-pass-filters applied to an array size of respectively 4x4 or 6x6. In an advantageous configuration the 4x4 or 6x6 low pass filter is combined with the 2x2 or 4x4 luminance-reconstruction filter respectively to establish one single filter. None of the resulting signals suffers from green non-uniformity artifacts caused by the sensor. Further details of the luminance-reconstruction-filter may be taken from the detailed description and from a patent application WO2004/006565, which has been filed on the same day as this application.

Nevertheless, depending on the optical transfer and the matrix, the reconstructed RGB signals may still suffer from a rest amount of colored aliasing according to the Nyquist-theorem. In order to still reduce the rest amount of aliasing, additionally to the luminance-reconstruction-filter the color-reconstruction-filter may be applied. In particular therefore the color-reconstruction-filter comprises a false-color-filter to eliminate false colors from the input.

As proposed by the invention and as outlined above already the contour-reconstruction-filter is applied in parallel with the color-reconstruction-filter.

Preferably the false-color-filter is applied to a smallest possible array of green-pixels. Specifically the false-color-filter comprises steps in which the red- and blue-pixels in the smallest possible array of green-pixels are weighted by green-parameters and the weighted red and blue pixels are summarized by a median filter together with an average of one or more of the green-pixels in the array. An average of one or more green-pixels in the array may be taken by applying an average filter. In particular the average of green-pixels in a vertical direction and an average of green-pixels in a horizontal direction may be taken. The median-filtered pixels are compared with low-frequency-filtered pixels of the smallest possible array of green-pixels, whereby false colors are eliminated from the input.

Such scheme advantageously allows for an adjustable false-color-filter, in particular the color-reconstruction-filter and/or the false-color-filter is applied to a smallest array of green-pixels having preferably an array-size of 3x3. Still, if necessary, such predetermined small array may also be of 5x5 size or larger. Such adjustment is independent of an optical low-pass-filter. Such array however should comprise at least four pixels, i.e. two green-pixels, one red-pixel and one blue-pixel.

Preferably the applied color-reconstruction-filter has an array-size of 3 x 3 or 5x5. In particular, an array-size of 5x5 is preferred in case of a heavy sensor matrix.

Further, the green, and also the red and blue, color-reconstruction, i.e. the RGB-reconstruction, is fully independent of the 3 x 3 green false-color-array. The RGB-reconstruction-filter may be of 3 x 3 or 5x5 size. It is a particular advantage of the proposed method that the false-color functions are independent of the color-reconstruction-functions.

Specifically the or a number of green-parameters may be used in the color-reconstruction-filter solely within the false-color-filter.

Further a color-reconstruction-filter may be applied to an away size of 3 x 3 or in particular to an array-size of 5x5 in case of a heavy sensor matrix. The coefficients of a corresponding filter function may be chosen as a function of the optical transfer and matrix. In particular this is outlined in a chapter 4 of the detailed description of a patent application WO2004/006565. Such methods maximize the resolution for near-white colors which for average scenes seem to be the most important eye catchers. In particular sufficient resolution is provided while the amount for signal distortion is minimized.

The rules for defining the filter coefficients of a 3 x 3 and a 5x5 RGB color-reconstruction-filter are outlined for a preferred embodiment in particular in a patent application WO 2004/006183 which has been filed on the same day as this application.

In a further preferred configuration a post-filter is applied in order to maintain in its output a phase to the output of a reconstruction-filter which has been applied previously. Advantageously the post-filter is applied subsequent to a false-color-filter, i.e. the post-filter is applied to the output of the false-color-filter after the RGB-reconstruction-filter. The reconstruction-filter may also be the luminance filter. Specifically the phase is fixed by advantageously applying subsequent to a false-color-filter a post-filter of2x2-array-size by which a center-output-pixel of a smallest possible array of green-pixels is positioned in phase with a white-pixel. The white-pixel itself is centered with respect to the same array as to which a luminance-reconstruction-filter has been applied to. In particular signals are RGB-reconstructed on basis of a 3 x 3 or 5x5 array size and will get the same phase as the white compensated luminance signal due to the 2x2 post filter. It is in particular advantage of this configuration, that the false color-filter does not influence the phase. The post-filter advantageously also eliminates a green-non-uniforrnity of an image sensor. A preferred embodiment of the false-color-filter and particular ways of post-filtering may be taken from the above mentioned patent application with internal file number ID606638-II.

Still also, as an alternative, a post filter may be left out for the use of a 3 x 3 or 5x5 RGB color-reconstruction-filter in a further preferred embodiment, which is referred to as a smartgeen4-reconstruction-method, outlined in chapter 5 of the detailed description. This allows a simple and efficient processing and is therefore advantageous with regard to low-cost applications.

Further advantageously a low pass luminance signal is realized having a transfer characteristic as equal as possible to the total RGB transfer. The matching of a 4x4 or 6x6 low-pass-luminance-filter with respectively a 3 x 3 or 5x5 green reconstruction filter is preferably achieved by a 2x2 post-filter.

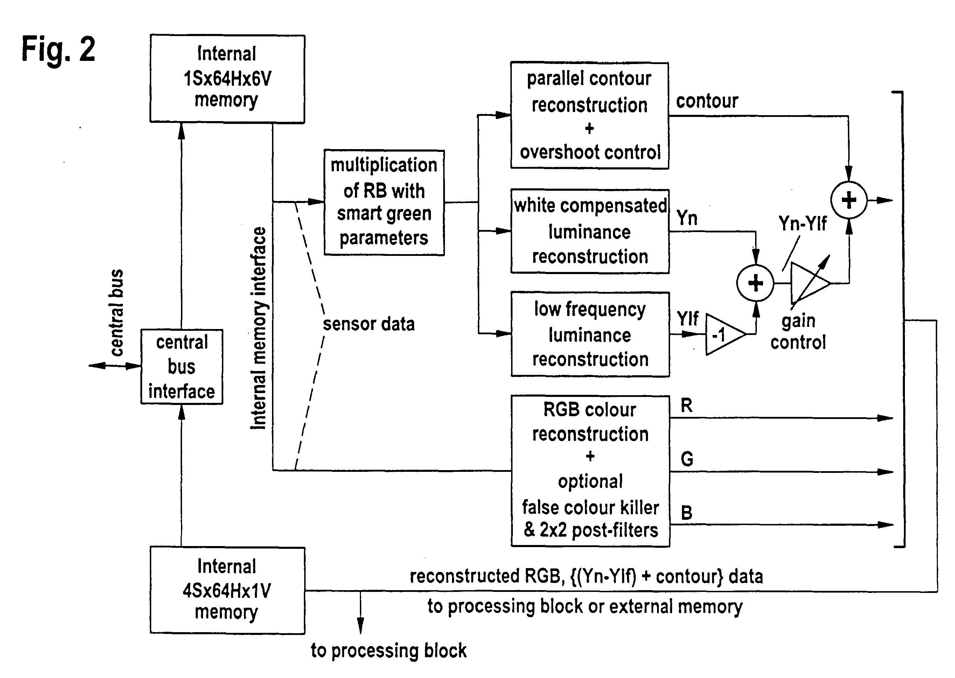

In a further preferred configuration a high frequency luminance-filter is applied in dependence of an optical transfer of an optical system providing an image signal to the image sensor. Thereby a high-frequency aliasing free luminance component can be added to the low frequency reconstructed color signals in order to mask color artifacts. A corresponding preferred embodiment is described in the detailed description with reference to Figure 2 of the drawing.

The proposed method is adapted such that the optical transfer of the camera does not limit the application of a suitable filter. In other words, arbitrary optical low pass filters may advantageously be applied, merely depending on the application of a customer. It is even acceptable to apply no optical low pass filter at all. Especially this is achieved by the appliance of a false-color-filter as proposed, which is in particular adjustable independent of the optical transfer of the camera or of the sensor matrix. In particular, the false color filter can be adjusted as a function of the optical transfer of the camera at one half of the pixel frequency.

Furthermore, various luminance-reconstruction-filters are offered for appliance. In particular a luminance-reconstruction-filter is applied to an array size of 2x2 in case of no or slight optical low pass filtering and further a respective luminance-reconstruction-filter is applied to an increased array size of 4x4 or 6x6 upon heavier low pass filtering.

Furthermore, various color-reconstruction-filters are offered for appliance. In particular a 3x3 color-reconstruction-filter is applied in case of a 2x2 luminance-reconstruction-filter or a 5x5 color-reconstruction-filter is applied in case of a 4x4-luminance-reconstruction-filter.

Furthermore, various contour-reconstruction-filters are offered for appliance. In particular a 4x4-contour-reconstruction-filter is applied in case of a 3x3-color-reconstruction-filter and further a 6x6-contour-reconstruction-filter is applied in case of a Sx5-color-reconstruction-filter. Advantageously the proposed method allows appliance of reconstruction-filters, which are adjustable as a function of the optical transfer of an optical system, e. g. of a camera or a sensor matrix. Therefore, depending on the chosen color-reconstruction-filter the output does hardly or not suffer from artifacts. A further advantage is, that the green-nonuniformity caused by a sensor is diminished. It is mostly a 5x5 green reconstruction filter that suffers from green-green differences. In particular by the aid of a 3 x 3-green-reconstruction-filter in combination with the 2x2-post-filter such green-nonunifonnity is removed or diminished.

A preferred derivate of the proposed method is of particular interest and dedicated for low cost applications. It has been already mentioned above as smartgreen4 and combines the appliance of a 3×3 color reconstruction-filter and a 5x5-contour-reconstruction-filter. In particular subsequently a color-reconstructed and a contour-recunstructed signal are added for further processing. Smartgreen4 advantageously offers a low power consumption and a minimum of hardware. Further details are outlined in chapter 5 of the detailed description.

As a particular preferred and advantageous configuration, the white compensated luminance reconstruction scheme of smartgreen as proposed above may be combined with a unique 5x5 aliasing and distortion free contour-reconstruction-filter. The contour-reconstruction-filter may be executed parallel to the color-reconstruct ion-filter. Such combination offers a strong reduction of artifacts in comparison with prior art filter schemes. Most advantageously such reconstruction scheme is based on the use of a 6x6 filter array. It may also incorporate several aliasing and distortion free parallel contour signals based on that array with the same performance as the above mentioned unique 5x5 aliasing free contour-reconstruction-filter.

In the whole processing chain as described above, i.e. the - RGB-reconstruction, in particular comprising
- the implementation of a post-filter for phase matching;
- the luminance-signal processing;
- the color-reconstruction-signal processing, in particular comprising the implementation of a false-color-filter and in particular a further post-filter; and in parallel thereto
- the contour-signal processing,
the amount of signal distortion is limited to an extremely low level.

This also holds for a final JPEG-conversion. In a preferred configuration as well column- and also row-wise processing may be performed to execute the smartgreen3-reconstruction-algorithm according to the proposed method. Such processing advantageously reduces the amount of internal memory and the amount of data swapping to and from an external memory. This will support processing effectivity and speed. Such measure also works if all data transfer is rotated by 90°.

The proposed method is advantageously executed on an apparatus as proposed above, in particular on a computing system and/or a semiconductor device. Such system may advantageously comprise an intermediate memory interface located between an image sensor and a processing chip. Thereby advantageously the length and the number of rows of a pixel array to be filtered is no longer restricted, also the amount of data swap to and from an external memory of course should not delay the processing time too much. Consequently, still real-time processing is possible. The computing system may be any kind of processor unit or system or computer.

Also real-time processing may preferably be performed without any memory using intermediate interface.

However, in this case, for cost reasons, the total amount of available row delays may be limited, in particular to two. This may result in that only three vertical taps are available for the RGB reconstruction as well as for the realization for the contour signal.

Further the invention leads to a computer program product storable on a medium readable by a computing system comprising a software code section which induces the computing system to execute the method as proposed when the product is executed on a computing system, in particular when executed on the computing system of a camera.

The invention will now be described with reference to the accompanying drawing. The detailed description will illustrate and described what is considered as a preferred embodiment of the invention.

It is therefore intended that the invention may not be limited to the exact form and detail shown and described herein nor to anything less than the whole of the invention as disclosed herein and as claimed hereinafter. Further the features described in the description and the drawings and the claims disclosing the invention, may be essential for the invention considered alone or in combination.

The detailed description accompanying the drawing provides the following chapters:
1. Processing flow of white compensated luminance reconstruction method
2. The white compensated luminance signal
3. RGB color reconstruction
4. Parallel aliasing free contour filtering
5. Smartgreen4.
6. Conclusions

The Figures of the drawing show preferred embodiments of the invention and are enumerated as follows:
Figure 1: Location of RGB- and contour-reconstruction in a memory based architecture;
Figure 2: Basic block diagram of the smartgreen3 reconstruction (particular information to the block regarding the multiplication of the R- and B-colors with the smartgreen parameters may be taken from WO 99/04555);
Figure 3: Realization of the white compensated luminance pixel Yn;
Figure 4: Several white compensated luminance reconstruction filters;

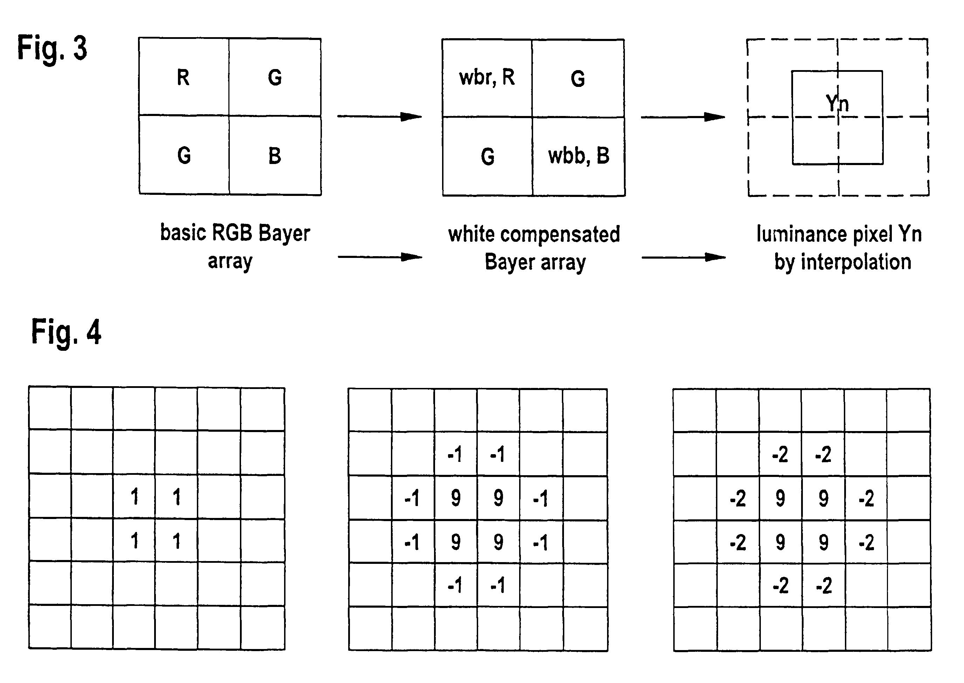

(Figures 3 and 4 illustrate the white-compensated-luminance signal of a preferred embodiment which is advantageously free of green-green differences. Green-green differences may be removed by a restoration of a green uniformity of a Bayer image which allows to eliminate green-green differences in the green signal of the sensor with maintenance of a Laplacian (i.e. smartgreen) RGB-reconstruction method and without visible resolution losses. Also they may be removed by preventing green non-uniformity in the parallel contour signal of RGB Bayer image sensors, which may be performed by developing a two-dimensional parallel contour filter that eliminates the green-green differences caused by the image sensor.)

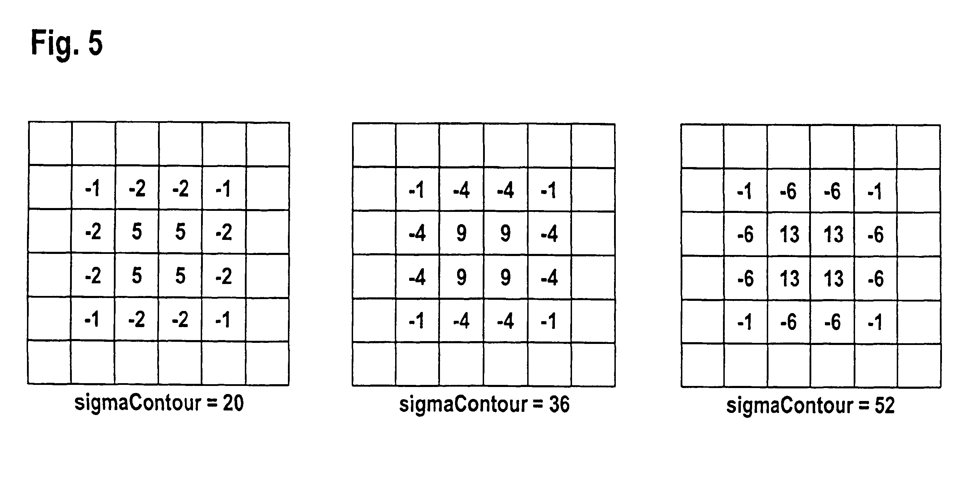

Figure 5: Three 4x4 contour filters;

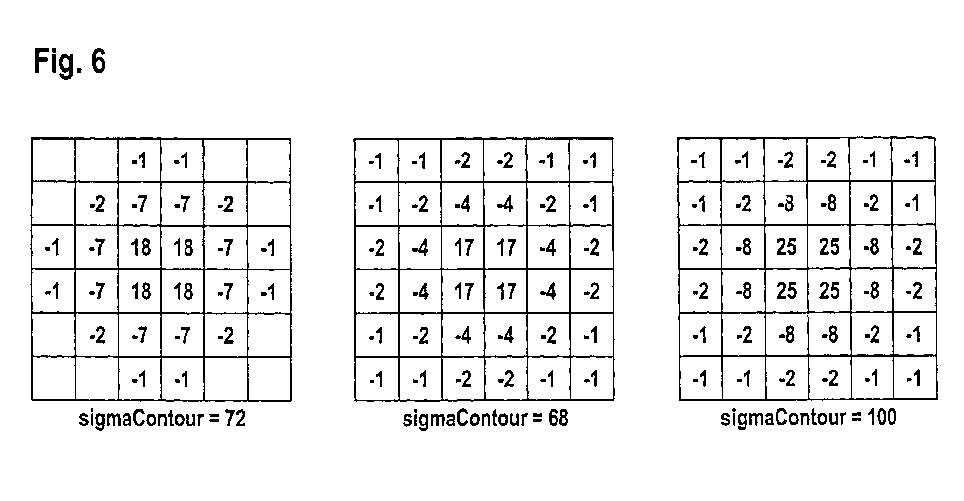

Figure 6: Three 6x6 contour filters;

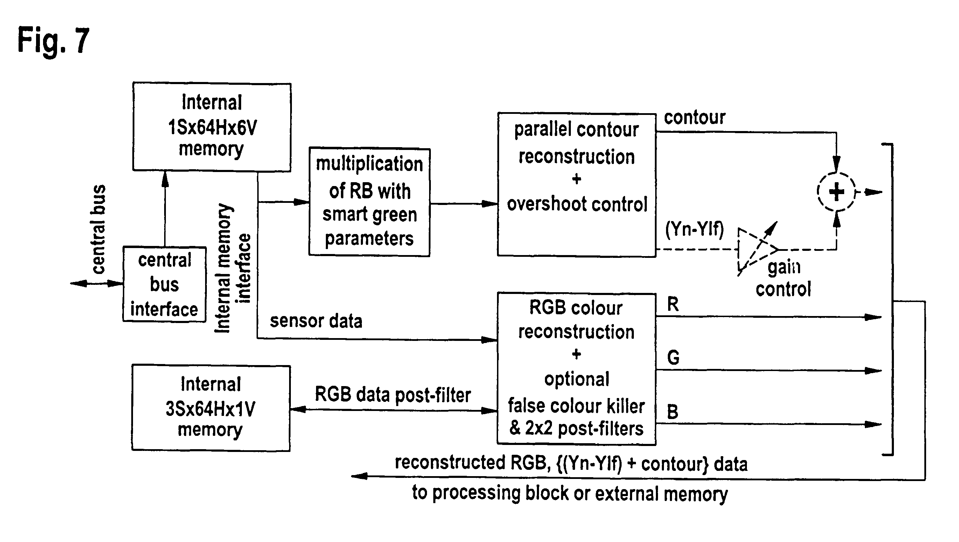

Figure 7: Further simplification of the smartgreen3 block diagram of Figure 2 by using one contour filter;

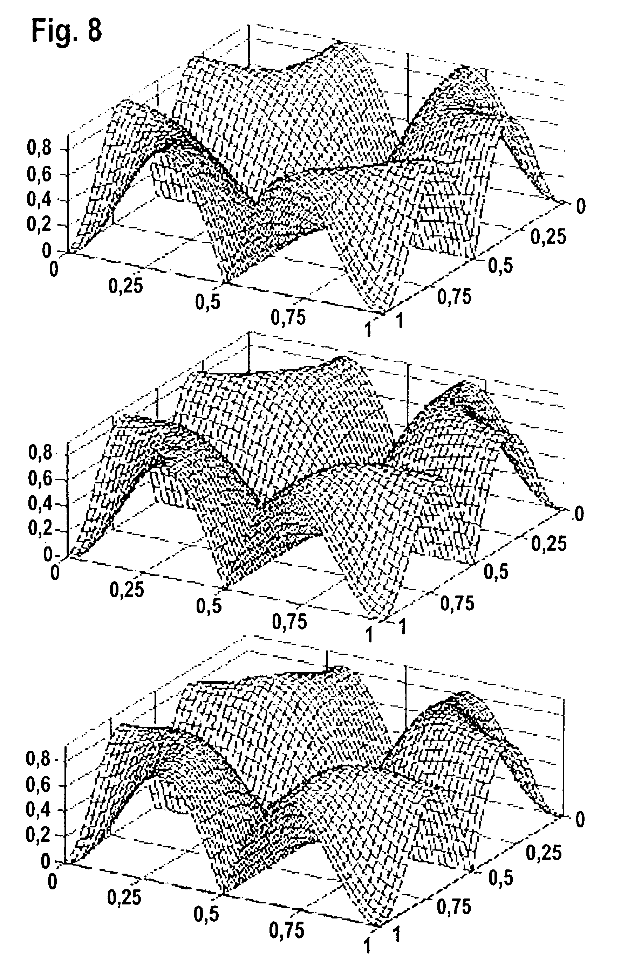

Figure 8: Transfer characteristics of the three 4x4 contour filters of Figure 5;

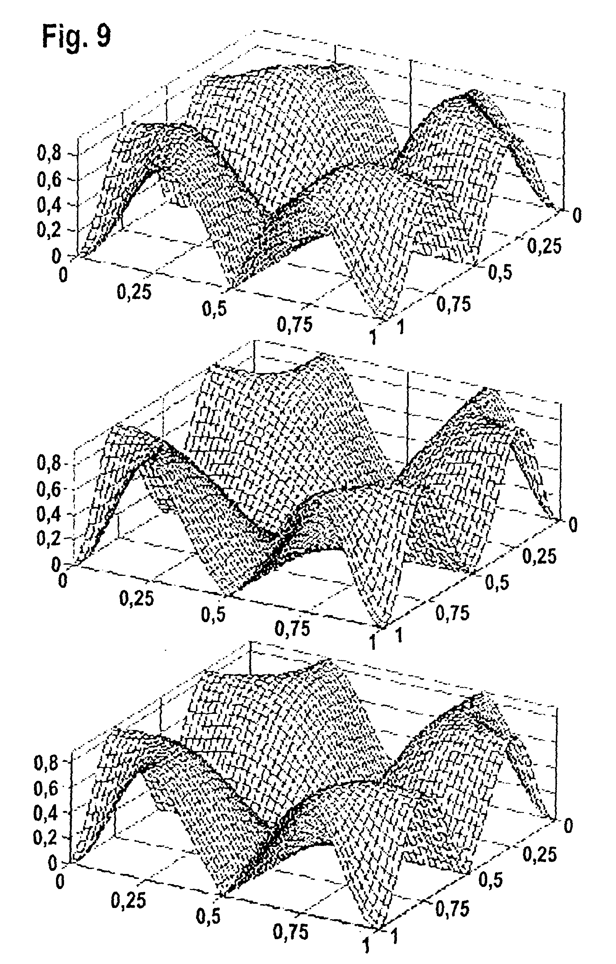

Figure 9: Transfer characteristics of the three 6x6 contour filters of Figure 6;
(Figures 5 to 9 illustrate a preferred embodiment capable to provide aliasing free parallel contour signals. This may be achieved by either parallel color- and contour processing for Bayer image sensors, which allows to use the green signal from the image sensor for generating a two-dimensional contour signal in parallel with the RGB color reconstruction. The advantage is that no extra row delays are needed as it is the case with serial contour processing. An aliasing free contour processing for a RGB Bayer image sensor, which is based on a unique 5x5 parallel contour filter that, has no need for an optical low pass filter and has a zero throughput at the first RGB sample frequency. Its signal distortion is almost zero, resulting in a contour signal without visible artifacts. The so far known contour filters amplify the back folded and undesired frequencies outside the Nyquist domain of the sensor as well. This will lead to distortions and as a consequence a better visibility of the unwanted aliasing components in the picture. This unique 5x5 filter prevents those aliasing artifacts and moreover eliminates the green-green differences caused in the green channel of the image sensor.)

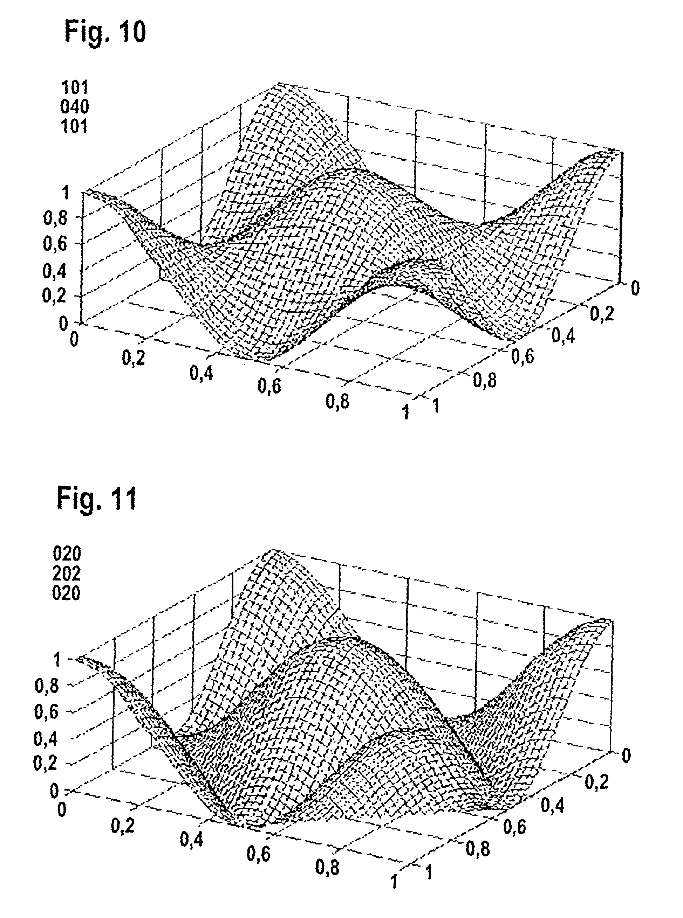

Figure 10: 3x3 green reconstruction for center green is present;
Figure 11: 3x3 green reconstruction transfer for center green is absent;
Figures 10 and 11 illustrate a preferred embodiment;

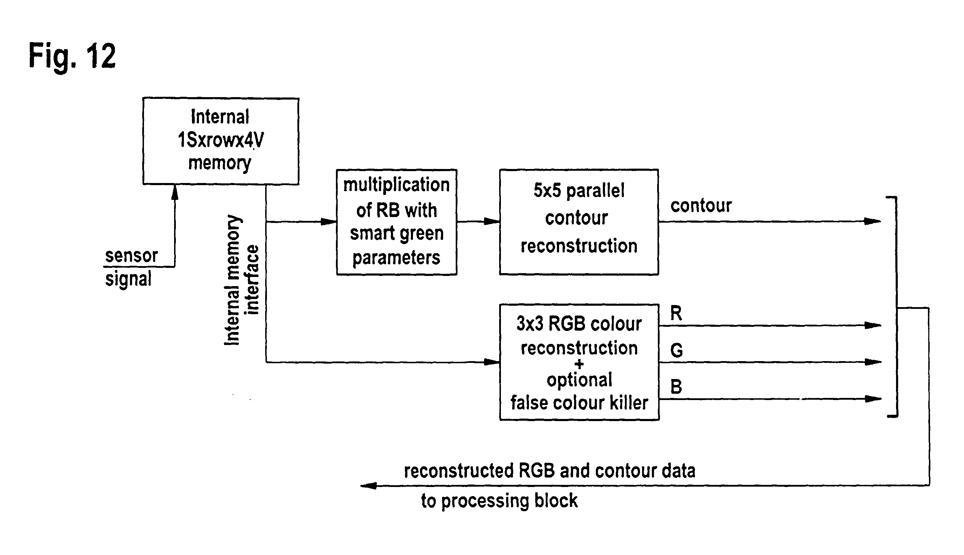

Figure 12: Basic block diagram of the smartgreen4-reconstruction;

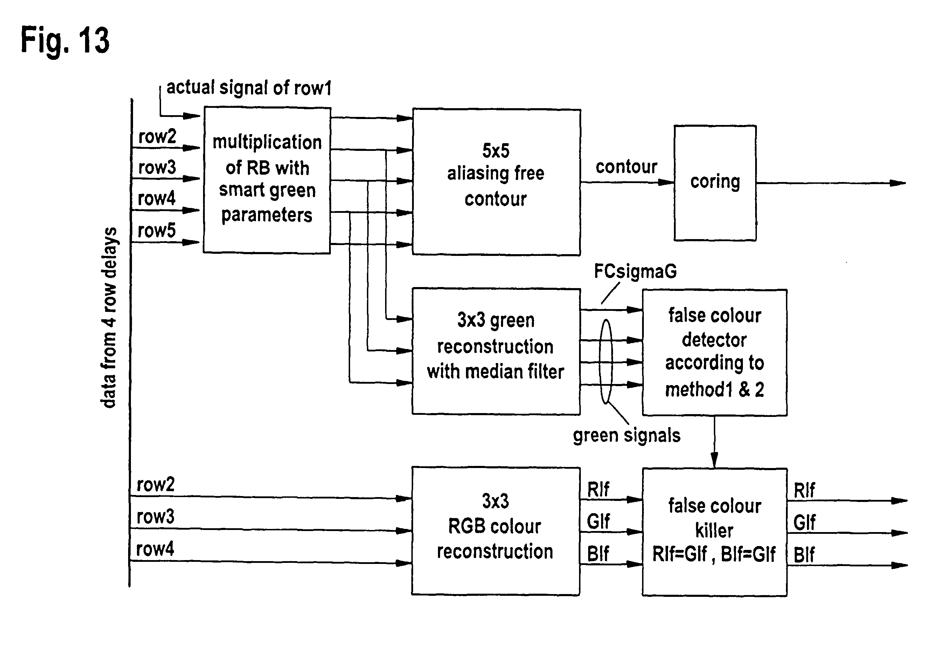

Figure 13: Details of smartgreen4 showing 3x3 RGB reconstruction in combination with 5x5 aliasing free contour reconstruction;

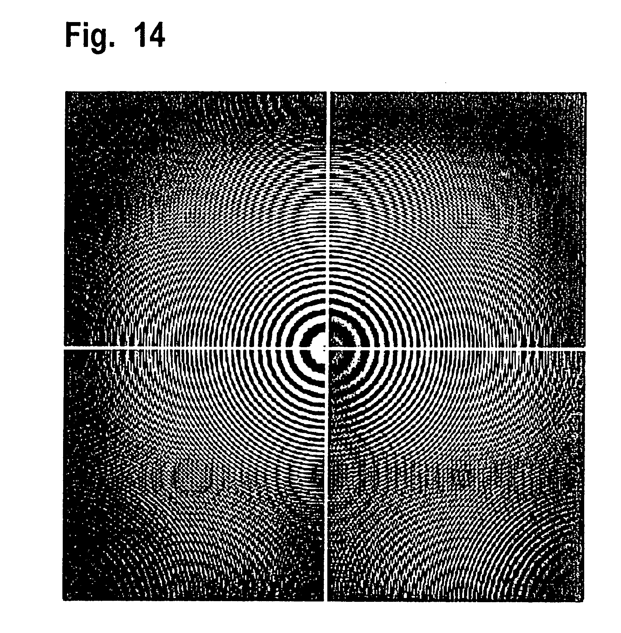

Figure 14: Top-left: 3x3 RGB reconstruction with a 5x5 aliasing free contour filter, top-right: an aliasing free contour-filter only, bottom left: a 3x3 RGB reconstruction with a 5x3 contour-filter, bottom-right: a 5x5 contour-filter only;
Figures 12 to 14 illustrate a preferred embodiment i.e. a smartgreen4-method with 3x3 and 5x5 filter weights of smartgrecn3 as shown in Figures 10 and 11, wherein there is no need for a 2x2 post filter.

### 1. Processing flow of the white compensated luminance reconstruction method

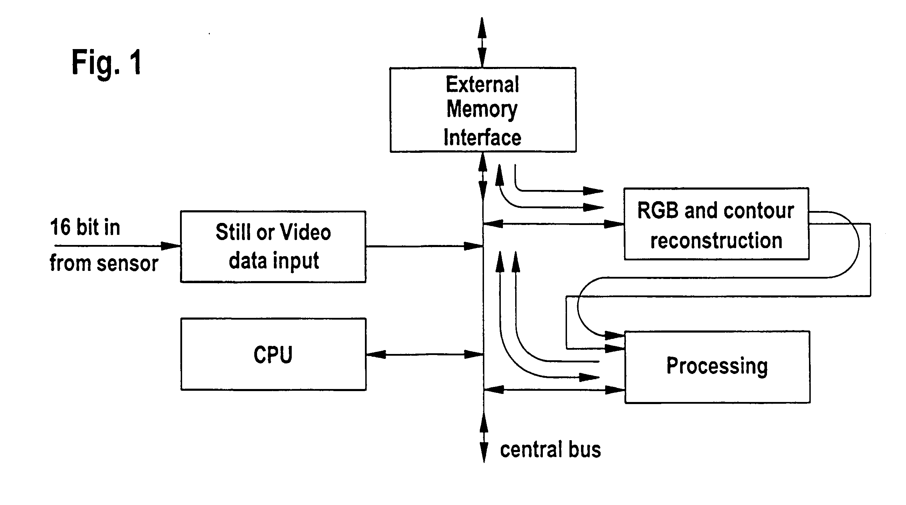

In Figure 1, a part of a general architecture of an integrated circuit with a central bus and an external memory interface is shown. A sensor signal is offered via the central bus to the external memory. For the realization of the RGB-color-reconstruction and of the parallel contour-reconstruction the sensor data is retrieved from the external memory via the central bus to the reconstruction. After reconstruction the data are sent directly to the processing block or sent back to the external memory.

The processing block contains more or less standardized camera functions as the matrix, white balance, knee and gamma. Sending the reconstructed data directly to the processing is an important issue because in order to obtain a fast execution time for still pictures or for video data, the amount of time consuming data swap from and to the memory should be limited.

In Figure 2 a more detailed block diagram of a preferred embodiment of the proposed method, hereinafter referred to as "smartgreen3"-signal-reconstruction, is shown. Via the central bus the sensor data is sent from the external memory in small packets to a small internal memory array in the reconstruction block. From this [1Sx64Hx6V] array in Figure 2, containing 1 Signal (16 bits) and 64 Horizontal by 6 Vertical pixels (768 bytes) as an example, the raw sensor data can be randomly retrieved for reconstruction. In particular, a row of sensor data can be processed in multiples of (64-2*ho) pixels, where ho is the horizontal offset of the filter array. For an nxm reconstruction array, where "n" are horizontal and "m" are vertical pixels, the offset is ho=n div 2 "div" means rounding in the direction of zero to the nearest integer. Therefore, it holds ho=1 for n=3, ho=2 for n=4 or n=5 and ho=3 for n=6. The first pixel that can be reconstructed is at position 1+ho, the last one at position N-ho, where N is the total number of pixels in a sensor row. Reconstructing a complete sensor row requires N/(64-2*ho) packages to be sent to the reconstruction block. In the lower part of Figure 2, the RGB color signals are reconstructed with the raw sensor data. The (low) frequency transfer, by means of the choice of the filter weights, depends on the optical transfer of the camera. Whether the false color killer and the 2x2 post-filters are used or not also depends on the optical transfer. In the upper part of Figure 2 the R and B pixels are multiplied with the smartgreen parameters. The smartgreen parameters may e.g. be retrieved according to the method disclosed in WO 99/04555 or in EP 01 200 422.2. With this specific signal three aliasing free luminance signals are reconstructed: the contour signal, the white compensated luminance signal Yn and a low frequency luminance signal Ylf. The latter has about the same transfer characteristic as the reconstructed RGB signals. By subtracting the low frequency signal Ylf from the white compensated luminance signal Yn, a high frequency luminance component is generated: (Yn-Ylf). It is important to be aware of the fact that in the preferred embodiment, in order to prevent undesired false colors at higher frequencies, the (Yn-Ylf) signal if ever possible should not earlier be added to each color signal then after the matrix and white balance functions in the processing block. The very same counts for the contour signal. Preventing the mentioned undesired false colors is the reason why the total output of the reconstruction block consists of four or respectively three signals. Besides the fastest possible execution time this is a second reason why it is preferred to send all signals directly to the processing block. A third reason can be that it makes twice a [4Sx64Hx1V] internal memory superfluous, one in the reconstruction block for sending the four signals to the external memory and one in the processing block for retrieving them again. The [4Sx64Hx1V] internal memory stands for the storage of four (16 bit) signals of (64-2*ho) horizontal pixels of one vertical row, containing a total of 640 bytes when rounding to 64 pixels.

When maximum flexibility of the design is required, e.g. for a time consuming reconstruction and/or processing by means of specific software via the CPU, then the two [4Sx64Hx1V] internal memories, one for the reconstruction and one for the processing, should be applied.

At the top of Figure 2 the aliasing free contour is realized followed by the overshoot control processor which prevents over- and undershoots at lower frequencies. Two-dimensional sharpness improvement using a two-dimensional step transient signal is achieved by the realization of a two-dimensional detection signal which is suited for controlling overshoots. This so called step transient signal can be used for several overshoot (and undershoot) control methods, and results in a very attractive sharpness improvement without exaggerated and unnatural looking overshoots. It is allowed to add the contour and the (Yn-Ylf) signal to a single signal that is sent to the internal [4Sx64Hx1V] memory.

The following chapters may be summarized as follows.

In chapter 2, the realization of an aliasing free and zero distortion luminance signal Yn with a 2x2 and 4x4 filter array is described. Details of a luminance-reconstruction-filter are disclosed in particular in chapter 2 of the detailed description of a patent application WO 2004/006565. Also low frequency luminance signals with a 4x4 and a 6x6 low pass filter array are explained in chapter 3 therein. The realization of the low frequency RGB reconstruction with or without a false color killer, is further described. Details of a color-reconstruction-filter are disclosed in particular in chapter 3 of the detailed description in a patent application WO2004/006183.

The realization of a 5x5 aliasing free contour-filter is described in chapter 2 and 4x4 and 6x6 aliasing free contour signals are described in chapter 4 in the following.

The concept proposed in this application and the filters described herein may also be adapted in a flexible way as a function of the optical transfer and sensor matrix. This is also described in detail in chapter 4 of the detailed description of above patent application W02004/006565.

### 2. The white compensated luminance signal

The white compensated luminance signal is based on the calculation of the smartgreen parameters. Examples are shown in WO 99/04555 and EP 01 200 422.2. The SmartGcntrlR and SmartGcntrlB parameters are referred to as: wbr and wbb respectively. Figure 3 shows that the red and blue pixels are multiplied with the smartgreen parameters. Next the four pixels are added together resulting in a white compensated luminance pixel Yn. The center of pixel Yn is shifted half a pixel to the right and to the bottom, considering the R pixel as the first one. The consequence is that all other signals that have to be reconstructed, i.e. red-green-blue and contour, should get the same center position as this Yn signal.

The advantages of the white compensated luminance signal Yn are the very same as for the 5x5 aliasing free contour signal. An aliasing free contour- signal for RGB Bayer image sensors is based on a unique 5x5 parallel contour filter that, without the need for an optical low pass filter, has a zero throughput at the first RGB sample frequency. Its signal distortion is almost zero, resulting in a contour signal without visible artifacts. The so far known contour filters amplify the back folded and undesired frequencies outside the Nyquist domain of the sensor as well. This will lead to distortions and as a consequence a better visibility of the unwanted aliasing components in the picture. This unique 5x5 contour filter prevents those aliasing artifacts and moreover eliminates the green-green differences caused in the green channel of the image sensor. Particular advantages are:
1. Without the need of an OLPF (optical low pass filter), the Yn signal has a zero throughput at the first RGB sample frequencies, so it will cause no aliasing at those points. At the second and higher multiples of the sample frequencies the throughput is low, but the low pass of the lens and the modulation transfer function (MTF) of the sensor will be effective there as well.
2. The signal distortion is almost zero, resulting in a luminance signal Yn without visible artifacts.

In the following it will be explained why a 2x2 white compensated luminance filter is particularly advantageous.
1. The 2x2 unity is needed for the elimination of the modulated color information in the sequential RGB Bayer color signal of the image sensor and the elimination of the green non-uniformity caused by the image sensor. Preventing green non-uniformity in the parallel contour signal of RGB Bayer image sensors and is achieved by a method for developing a two-dimensional parallel contour filter that eliminates the green-green differences caused by the image sensor. Parallel contour processing for Bayer image sensors allows to use the green signal from the image sensor for generating a two-dimensional contour signal in parallel with the RGB color reconstruction.
   The advantage is that no extra row delays are needed as it is the case with serial contour processing. It has to be noted that whatever OLPF-type has been used, it does neither influence this color modulation in large saturated color areas nor the green non-uniformity.
2. The multiplication by the smartgreen parameters is needed in order to undo the effect of a matrix, wherein the sum of the coefficients of the matrix is not equal to unity, and/or the effect of the environmental color temperature.

These are the two reasons why the smartgreen parameters are calculated. If those parameters are not unity, the color sensor will not act as a black and white sensor.

A slight disadvantage of the 2x2 white compensated luminance signal Yn may be that the resolution will be reduced when an optical low pass filter (OLPF) is applied. However this can be compensated by applying 4x4 filters for the reconstruction of Yn. Depending on the amount of the low pass transfer of the OLPF, a Yn filter with heavier weights can be chosen. On the left hand side of Figure 6 the already described 2x2 Yn filter is shown. In the middle and on the right hand side two 4x4 Yn filters are shown. The right one is the 'heaviest' filter. Besides for compensating the transfer loss of an OLPF they also can be applied for compensation of the transfer loss of the lens.

The 4x4 Yn filters restore the green uniformity and eliminate the modulation in colored areas as well. The green uniformity restoration can be achieved by preventing green non-uniformity in the parallel contour signal of RGB Bayer image sensors which may be performed by developing a two-dimensional parallel contour filter that eliminates the green-green differences caused by the image sensor. Parallel contour processing for Bayer image sensors allows to use the green signal from the image sensor for generating a two-dimensional contour signal in parallel with the RGB color reconstruction. The advantage is that no extra row delays are needed as is the case with serial contour processing. As a rule one may say: The subtraction of neighbor diagonal filter coefficients should result in a zero contribution. This will average and, as a consequence, eliminate the green-green differences of the neighbor green pixels.

The combinations of the negative coefficients always result in an addition of two green and a red a blue pixel, and also have the advantage of a zero transfer for the color modulation. It is to be noted that depending on the combination of the total optical transfer and the heaviness of an arbitrary 4x4 Yn filter, finally undesired over- and undershoots can occur. The choice of the coefficients can only be done when the optical transfer is known, for example by shooting and processing a zone plate scene.

### 3. RGB color reconstruction.

The reconstruction method described in this preferred embodiment should be suited for cameras with an arbitrary optical low pass filter (OLPF) or with no OLPF at all. The choice of an appropriate OLPF is not a simple matter. In most cases it is a compromise between the loss of sharpness and the acceptance of a certain amount of aliasing or preferably no aliasing at all. Relevant parameters are:
1. the optical transfer of the lens;
2. the modulation transfer function (MTF) of the sensor, including a possible pixel microlens, determining light sensitive parameters;
3. the sensor matrix, determined by the color array of the sensor. An extra amount of aliasing may be caused by the heaviness of the matrix and influence the specification of the OLPF transfer.
4. a given reconstruction algorithm, which of course results in a certain transfer characteristic as well, causing the need for more or less aliasing reduction by means of the OLPF.

If one of those four parameters in a camera has been modified, one should consider the adaptation of an OLPF. Here a problem arises which is that usually an OLPF is specified without taking all four mentioned parameters into account. Therefore, in the preferred embodiment it is tried to anticipate on an existing or a preferred camera design, i.e. the optics (pt. 1) and the sensor (pt. 2 and 3), a reconstruction method that offers some flexibility (pf. 4). The transfer of the reconstruction filters can be changed by choosing certain filter weights, or the possibility to apply a false color killer.

In chapter 5 a particular preferred RGB color reconstruction filter is explained: using a 3x3 array. Also a 5x5 array may be used for a RGB color reconstruction filter as described in a chapter 3.6 of the detailed description of a patent application WO2004/006183. Both can be applied with (or without) a false color killer.

### 4. Parallel aliasing free contour filtering

Similar to the unique 5x5 aliasing free contour filter mentioned above, the 4x4 and 6x6 aliasing free contour filters have a zero throughput at the first RGB sample frequency independent of the optical low pass transfer. Also the signal distortion is almost zero, as for the (Yn-Ylf) signal. This means that the aliasing free contour signal has no visible artifacts, because there is no back folding of undesired frequencies outside the Nyquist domain of the image sensor. Until now only one unique 5x5 aliasing free contour filter exists, however there are many 4x4 and 6×6 aliasing free contour filters possible, which all eliminate the green non-uniformity as well. In Figure 5 three 4x4 and in Figure 6 three 6x6 contour filters are shown. From the left to the right the 4x4 contour filters have an increasing throughput for high frequencies. In Figure 8 from the top to the bottom the three transfer characteristics of the 4x4 filters of Figure 4 respectively are shown. In Figure 9 the three different transfer characteristics of the 6x6 filters of Figure 6 respectively are shown starting at the top with the left 6x6 filter of Figure 6. The middle contour filter of Figure 6 has less amplification at the higher frequencies as compared to the left and the right one. This can clearly be seen in Figure 9.

By leaving out the upper and bottom row of the 6x6 filters in Figure 6, 6x4 filters are obtained with a sigmaContour of respectively 68, 52 and 84. The reason this is mentioned is because it offers the possibility of a smartgreen3-method with 4 rows or respectively 6 rows. On purpose the first 4x4 filter of Figure 5 has the very same weights as a first (Yn-Ylf) filter, just as the first 6x6 filter of Figure 46 is the same as a further (Yn-Ylf) filter. Again there is a possibility to combine the filter weights of the (Yn-Ylf) and the contour filter, resulting in a further simplification of the smartgreen3-method design. If done so, then the coring or a local noise reduction (LNR) or an overshoot control processing (OCP) may be performed on the total obtained contour signal, or on a part of it, as it is shown in Figure 7. The dashed part illustrates that a part of the contour signal, without LNR and OCP, can be applied as a (Yn-Ylf) signal. From a performance point of view there are no objections to do so. It is still possible to switch off the contour signal for demonstration purposes and, if switched on, to control its parameters. This possibility has same advantages with regard to a variety of applications. The only disadvantage of the block diagram of Figure 7 is that trying out another contour filter transfer, has consequences for the (Yn-Ylf) signal as well. Therefore, if a convenient adjustment and having some flexibility, is given priority it may be preferred in an alternative not to combine the (Yn-Ylf) filter and the contour filter.

As already stated, the choice of the (Yn-Ylf) filter is not too critical. Therefore, it does not make sense to describe how to combine its filter weights with the weights of the contour filter in order to obtain a single filter.

The choice of the contour filter type and the adjustment of the amount of contour depends on the personal taste at judging several pictures. The only directive that can be given is that it is rather logical to apply a 4x4 contour filter when a 3x3 color reconstruction has been chosen and a 6x6 contour filter in case of a 5x5 color reconstruction. Further, while adding contour, special attention should be paid to the desaturation of colored edges.

In the following, two very sophisticated contour processing features as overshoot control processing (OCP) and local noise reduction (LNR) is explained. A general procedure for OCP may use a continuous luminance signal as it is available for example in TV-applications. In such a procedure, two dimensional sharpness improvement using a two-dimensional step transient signal is achieved by the realization of a two-dimensional detection signal that is suited for controlling overshoots. This so called step transient signal can be used for several overshoot, and also undershoot, control methods, resulting in a very attractive sharpness improvement without exaggerated and unnatural looking overshoots. In multiplexed RG/RB sensors special attention should be paid to the most important goal of the smartgreen3 processing, being the prevention of visible artifacts. Regarding the LNR, a method for a very specific two-dimensional contour filter can be applied. By such a method a contour with local noise reduction for digital electronic cameras is achieved by the realization of a very specific two-dimensional contour filter that is capable to reduce the amount of noise as well as the sharpness by means of a two-dimensional standard deviation function. An arbitrary contour filter, as applied with smartgreen3 and described above, preventing visible artifacts is also possible.

In this chapter a smartgreen3 derivate will be described which is referred to as smartgreen4. It consists of a 3x3 color reconstruction, does not use the (Yn-Ylf) signal and should preferably only be applied with two possible contour filters, a 5x5 or a 5x3 one. It is particular suitable for low cost applications.

### 5. Smartgreen4

A very fast processing method with a very acceptable result, better than the smartgreen1/2 methods, is offered by the combination of, on the one hand, the 3x3 RGB reconstruction as described in a chapter 3.1 of the detailed description and, on the other hand, the 5x5 aliasing free contour filter as mentioned above.

The mentioned unique 5x5 parallel contour filter has without the need for an optical low pass filter, a zero throughput at the first RGB sample frequency. Its signal distortion is almost zero, resulting in a contour signal without visible artifacts. The so far known contour filters amplify the back folded and undesired frequencies outside the Nyquist domain of the sensor as well. This will lead to distortions and as a consequence a better visibility of the unwanted aliasing components in the picture. This unique 5x5 contour filter prevents those aliasing artifacts and moreover eliminates the green-green-differences caused in the green channel of the image sensor.

The transfer characteristics of the RGB color-reconstruction-filters arc shown in Figures 10 and I and have better matching characteristics for a 3x3 green-reconstruction-filter as conventional filters. In the upper-left corner the filter weights are displayed.

Although a 2x2 post-filter will eliminate green-green differences, also this green-reconstruction-filter will already do that. A method for developing a two-dimensional parallel contour filter that eliminates the green-green differences caused by the image sensor can be applied.

As a rule, "the subtraction of neighbor diagonal filter coefficients should result in a zero contribution. This will average and as a consequence eliminate the green-green differences of the green-pixels". The use of this rule has also been explained in the description of the white compensated luminance signal in chapter 2.

The advantages of better matching green filters are that:
- they will cause less greenish interferences at higher diagonal frequencies
- less false color killer artifacts will occur,
- the signal is free of artifacts at edges.
It is to be noticed that a difference with the smartgreen 1/2 reconstruction method is that smartgreen4 like smartgreen3 does not apply the smartgreen signal as a color signal. The smartgreen signal is only used for the false color detector as illustrated in Figure 13. The lack of artifacts in lower image parts is mainly caused by green transfer characteristics. The filters described here are matching better than the filters in conventional reconstruction methods. This is a particular advantageous difference, which offers a surprisingly perfect reconstruction at colored and black and white edges. This makes the green filter combination of the Figures 10 and 11 very unique and it will be explained in the following how the 3x3 reconstruction-filter is applied within the smartgreen4-reconstruction.

The method is referred to as smartgreen4 and it offers all the mentioned advantages of both, reconstruction methods and also methods for the elimination of green-green differences. Because it is fast it can be applied for video signal reconstruction or, depending on the application, for still images as well. It is an interesting option to implement the possibility of this unique combination in a smartgreen3 chip design. Also for dedicated applications, requiring low power and a minimum of hardware, as for example with CMOS sensors, this combination seems to be a very advantageous embodiment. For dedicated high volume and low cost CMOS applications again fixed row delays can be applied in order to avoid external memory. In Figure 12 the basic block diagram for such an application is shown with an internal memory of [1 Sxrowx4V], i.e. four dedicated row delays. In Figure 13 a more detailed diagram of the reconstruction is shown.

The false color detector acts with a smartgreen1 signal and applies respectively for the presence of green and for the absence of green. In case of the absence of green the detector should only be applied using a 5x5 array. Therefore here it has been chosen for the simplest version, using the smartgreen signal for the center row only. Four row delayed signals are offered to the 5x5 aliasing free contour reconstruction filter. The actual sensor signal contains the data of row 1. No local noise reduction, or overshoot control has been applied, however this is of course possible. Only a simple coring circuit reduces the noise.

At the left-top of Figure 14 the result of the above described processing is shown. For all four quadrants of the artificial zone plate the same optical low pass filter has been applied as well as the matrix of the Philips FT19 sensor.

At the top-right the 5x5 aliasing free contour signal of the zone plate is shown (with a gain of 0.7). As can be seen it is completely free of interferences.

At the bottom-right the 3x3 RGB reconstruction by use of filters of Figures 10 and 11 is shown combined with a very specific 5x3 parallel contour filter, which advantageously eliminates the green-green differences caused by the image sensor. Also for a further price reduction such a filter is very interesting because then only two instead of four row delays are needed. As can be seen the performance is less good. The sharpness has become asymmetrical due to the loss in the vertical direction and there are more interferences. Further more greenish aliasing occurs around the RGB sample frequency in the outer bottom-left corner. At the bottom-right only the 5x3 contour signal is shown (gain 1.0) which can be easily compared with the above lying 5x5 aliasing free contour. Most preferably, the contour signals also have been added to the RGB signals after the matrix and white balance processing.

For the processed results on the left hand side the above described false color killer has been applied.

Both applications shown in Figure 14, at the top with the 5x5 aliasing free contour and at the bottom with the specific 5x3 contour, should be judged as smartgreen4 processing methods.

### 6. Conclusions

The following particular advantages are achieved with the smartgreen3 reconstruction-method compared with smartgreen 1 and smartgreen2:
- It is a flexible design. Depending on the heaviness of the sensor matrix a choice can be made between two color reconstruction filters. As a consequence the (low pass) luminance filters can be defined application specific. Several high frequency luminance filters can be chosen and adjusted as a function of the optical transfer of the camera.
- If the false color killer is needed, then depending on the chosen color reconstruction, it does hardly or not suffer from visible artifacts (black and white dots). The reason is that a stronger low pass filtered color reconstruction is used than with smartgreen1 or smartgreen2.
- There are no artifacts at all due to the smartgreen reconstruction for the simple reason that the smartgreen concept is used only for the false color detection and not as a color signal. In order to compensate the loss of resolution, a high frequency luminance signal is generated.
- Depending on the chosen color reconstruction, the bandwidth of the back folding colored aliasing is smaller than with smartgreen1 and smartgreen2.
- The transfers of the red, green and blue reconstruction filters are matched in such a way that less or no greenish interferences will occur at higher diagonal frequencies as it is the case with the smartgreen1 and smartgreen2 filters.
- The color reconstruction filters are free of post stamp border looking artifacts at color and luminance edges.
- All generated luminance signals are free of aliasing and distortion by means of the so called luminance white compensation in combination with the filter weights.
- Smartgreen3 offers several aliasing free contour filters which can be chosen as a function of the optical transfer of the camera.
- All filters of the smartgreen3 design, presented here, eliminate the green non-uniformity caused by the sensor. The 5x5 green reconstruction filter finally does it with the help of the 2x2 post-filter.

In summary, due to its flexibility, the lack of signal distortion and its false color killer, smartgreen3 is well suited for the reconstruction and processing of digital still images and of contiguous video pixels of sensors having a Bayer color filter array.

An interesting derivative of smartgreen3 is smartgreen4. By offering a low power consumption and a minimum of hardware smartgreen4 is suited for dedicated still and video applications.

## Claims

1. A method for signal processing, wherein a sensor signal of an image sensor is provided as an input and wherein the input is reconstructed in a filter to establish an output for further processing, wherein the filter comprises a color-reconstruction-filter and a contour-reconstruction-filter, wherein
- the input comprises a plurality of pixels, and a pixel provides a color value assigned to at least one of the colors red, green or blue, comprising the steps of :
- applying the reconstruction filter to an array of pixels of predetermined array size comprising a number of pixels, wherein at least one of the number of pixels is formed by a red-pixel assigned to the color of red, at least one of the number of pixels is formed by a blue-pixel assigned to the color of blue, and at least one of the number of pixels is formed by a green-pixel assigned to the color of green,
- weighting the red- and/or the blue-pixel by a green-parameter, and
- applying the contour reconstruction filter comprising summing the pixels of the array after weighting by the green parameter into one output-pixel, and
- centering the output-pixel in the array; and **characterized by**
- applying the contour-reconstruction-filter in parallel with application of the color-reconstruction filter to the pixels.

2. The method as claimed in claim 1, comprising multiplying pixels of the array by contour reconstruction filter coefficients after weighting by the green parameter and summing the multiplied pixels into the output-pixel.

3. The method as claimed in claim 1, further comprising applying a luminance reconstruction filter comprising summing the pixels of the array, after weighting by the green parameter into one luminance reconstruction output-pixel.

4. The method as claimed in claim 1, comprising multiplying pixels of the array by luminance reconstruction filter coefficients after weighting by the green parameter and summing the multiplied pixels into the luminance reconstruction output-pixel.

5. The method as claimed in claim 3, **characterized by** combining the luminance-reconstruction-filter and a low-pass-filter into one single filter.

6. The method as claimed in claim 1, **characterized by** applying the color-reconstruction-filter to an array-size of 3*3 or 5*5.

7. The method as claimed in claim 3, **characterized by** applying subsequent to a false-color-filter a post-filter of 2*2 array-size, to position a center-output-pixel of a predetermined small array of green-pixels in phase with a white-pixel which is centered with respect to the same array as that to which the luminance-reconstruction- filter has been applied to.

8. The method as claimed in claim 3, **characterized by** applying the contour-reconstruction-filter, in parallel with the luminance-reconstruction-filter and by adding their reconstructed signals thereafter.

9. The method as claimed in claim 1, **characterized by** applying the contour-reconstruction-filter to an array-size which exceeds the size of an array to which the color-reconstruction-filter is applied to.

10. The method as claimed in claim 1, **characterized in that** the array-size is 5*5, 4*4 or 6*6.

11. The method as claimed in claim 3, **characterized by** offering various color-reconstruction-filters for appliance, in particular by applying a 3*3-color-rcconstruction-filter in case of a 4*4-luminance-rcconstruction-filter and/or applying a 5*5-color-reconstruction-filter in case of a 6*6-luminance-reconstruction-filter.

12. The method as claimed in claim 1, **characterized by** offering various contour-reconstruction-filters for appliance, in particular by applying a 4*4-contour-reconstruction-Filter in case of a 3*3-color-reconstruction-filter or applying a 6*6-contour-reconstruction-filter in case of a 5*5-color-reconstruction-filter.

13. The method as claimed in claim 1, **characterized by** applying a 3*3-color-reconstruction-filter in combination with a 5*5 contour-reconstruction-filter, in particular by adding subsequently a color-reconstructed and a contour-reconstructed signal for further processing.

14. An apparatus for signal processing, which is in particular adapted to execute the method as claimed in claim 1, comprising:
- an image sensor for providing a sensor signal as an input and
- a filter for reconstructing the input to establish an output for further processing, wherein the filter comprises a color-reconstruction-filter and a contour-reconstruction-filter, wherein
- the input comprises a plurality of pixels, and a pixel provides a color value assigned to at least one of the colors red, green or blue, wherein
- the reconstruction-filter is adapted to be applied to an array of pixels of predetermined array size comprising a number of pixels, wherein at least one of the number of pixels is formed by a red-pixel assigned to the color of red, at least one of the number of pixels is formed by a blue-pixel assigned to the color of blue, at least one of the number of pixels is formed by a green-pixel assigned to the color of green, and the apparatus further comprising:
- means for weighting the red- and/or the blue-pixel by a green-parameter,
- the contour reconstruction-filter comprising means for summing the pixels of the array after weighting by the green parameter into one output pixel,
- means for centering the output pixel in the array and
- means for parallel application of the contour-reconstruction-filter and the color-reconstruction-filter, the color reconstruction filter being applied to pixels from the array.

15. A computer program product storable on medium readable by a computing system, in particular a computing system of a camera, comprising a software code section which induces the computing system to execute the method as claimed in claim 1 when the product is executed on the computing system, in particular when executed on a computing system of a camera.

16. A computing system and/or semiconductor device, in particular a computing system of a camera, for executing and/or storing a computer program product as claimed in claim 16 thereon.

17. A camera comprising an optical system, an image sensor and a computing system as claimed in claim 16.

## Patentansprüche

1. Verfahren zur Signalverarbeitung, wobei ein Sensorsignal eines Bildsensors als Eingangssignal geliefert wird und wobei das Eingangssignal in einem Filter rekonstruiert wird um ein Ausgangssignal zur Weiterverarbeitung zu bilden, wobei das Filter ein Farbrekonstruktionsfilter und ein Umrissrekonstruktionsfilter umfasst, wobei
- das Eingangssignal eine Anzahl Pixel enthält, und ein Pixel einen Farbwert liefert, der wenigstens einer der Farben Rot, Grün oder Blau zugeordnet ist,
wobei das Verfahren die nachfolgenden Verfahrensschritte umfasst:
- das Anwenden des Rekonstruktionsfilters auf eine Anordnung von Pixeln einer vorbestimmten Anordnungsgröße mit einer Anzahl Pixel, wobei wenigstens ein Pixel der vielen Pixel durch ein Rotpixel gebildet wird, das der Farbe Rot zugeordnet ist, wenigstens ein Pixel der vielen Pixel durch ein Blaupixel gebildet wird, das der Farbe Blau zugeordnet ist, und wenigstens ein Pixel der vielen Pixel durch ein Grünpixel gebildet wird, das der Farbe Grün zugeordnet ist,
- das Gewichten des Rot- und/oder Blaupixels durch einen Grünparameter, und
- das Anwenden einer Umrissrekonstruktionsfilters, das die Summierung der Pixel der Anordnung nach der Gewichtung durch den Grünparameter zu einem einzigen Ausgangspixel, und
- das Zentrieren des Ausgangspixels in der Anordnung, und **gekennzeichnet durch**
- das Anwenden des Umrissrekonstruktionsfilters parallel zu der Anwendung des Farbrekonstruktionsfilters auf die Pixel.

2. Verfahren nach Anspruch 1, das Folgendes umfasst: das Multiplizieren von Pixeln der Anordnung mit Umrissrekonstruktionsfilterkoeffizienten nach der Gewichtung durch den Grünparameter und Summierung der multiplizierten Pixel zu dem Ausgangspixel.

3. Verfahren nach Anspruch 1, das weiterhin Folgendes umfasst: das Anwenden eines Leuchtdichterekonstruktionsfilters mit einer Summierung der Pixel der Anordnung nach Gewichtung durch den Grünparameter zu einem einzigen Leuchtdichterekonstruktionsausgangspixel.

4. Verfahren nach Anspruch 1, das Folgendes umfasst: das Multiplizieren von Pixeln der Anordnung mit Leuchtdichterekonstruktionsfilterkoeffizienten nach der Gewichtung durch den Grünparameter und Summierung der multiplizierten Pixel zu dem Leuchtdichterekonstruktionsausgangspixel.

5. Verfahren nach Anspruch 3, **gekennzeichnet durch** die Kombination des Leuchtdichterekonstruktionsfilters und eines Tiefpassfilters zu einem einzigen Filter.

6. Verfahren nach Anspruch 1, **gekennzeichnet durch** Anwendung des Farbrekonstruktionsfilters auf die Anordnungsgröße von 3*3 oder 5*5.

7. Verfahren nach Anspruch 3, **gekennzeichnet durch** Anwendung eines Nachfilters der Anordnungsgröße von 2*2 nach einem Falschfarbfilters zum Positionieren eines zentralen Ausgangspixels einer vorbestimmten kleinen Anordnung von Grünpixeln in Phase zu einem Weißpixel, das gegenüber derselben Anordnung zentriert ist, auf die das Leuchtdichterekonstruktionsfilter angewandt worden ist.

8. Verfahren nach Anspruch 3, **gekennzeichnet durch** das Umrissrekonstruktionsfilter , parallel zu dem Leuchtdichterekonstruktionsfilter und **durch** nachträgliche Addierung der rekonstruierten Signale.

9. Verfahren nach Anspruch 1, **gekennzeichnet durch** Anwendung des Umrissrekonstruktionsfilters auf eine Anordnungsgröße, die größer ist als die Größe einer Anordnung, auf die das Farbrekonstruktionsfilter angewandt wird.

10. Verfahren nach Anspruch 1, **dadurch gekennzeichnet, dass** die Anordnungsgröße 5*5, 4*4 oder 6*6 beträgt.

11. Verfahren nach Anspruch 3, **gekennzeichnet durch** das Anbieten mehrerer Farbrekonstruktionsfilter zur Anwendung, insbesondere **durch** Anwendung eines 3*3 Farbrekonstruktionsfilters im Falle eines 4*4 Leuchtdichterekonstruktionsfilters und/oder durch Anwendung eines 5*5 Farbrekonstruktionsfilters im Falle eines 6*6 Leuchtdichterekonstruktionsfilters.

12. Verfahren nach Anspruch 1, **gekennzeichnet durch** das Anbieten mehrerer Umrissrekonstruktionsfilter zur Anwendung, insbesondere **durch** Anwendung eines 4*4 Umrissrekonstruktionsfilters im Falle eines 3*3 Farbrekonstruktionsfilters oder **durch** Anwendung eines 6*6 Umrissrekonstruktionsfilters im Falle eines 5*5 Farbrekonstruktionsfilters.

13. Verfahren nach Anspruch 1, **gekennzeichnet durch** Anwendung eines 3*3 Farbrekonstruktionsfilters in Kombination mit einem 5*5 Farbrekonstruktionsfilter, insbesondere **durch** nachträgliche Addierung eines farbrekonstruierten und eines umrissrekonstruierten Signals zur Weiterverarbeitung.

14. Anordnung zur Signalverarbeitung, die insbesondere zum Durchführen des Verfahrens nach Anspruch 1 vorgesehen ist, wobei diese Anordnung Folgendes umfasst:
- einen Bildsensor zum Schaffen eines Sensorsignals als Eingangssignal und
- ein Filter zum Rekonstruieren des Eingangssignals zum Bilden eines Ausgangssignals zur Weiterverarbeitung, wobei das Filter ein Farbrekonstruktionsfilter und ein Umrissrekonstruktionsfilter umfasst, wobei
- das Eingangssignal eine Anzahl Pixel umfasst, und ein Pixel einen Farbwert schafft, der wenigstens einer Farbe der Farben Rot, Grün oder Blau zugeordnet ist, wobei
- das Rekonstruktionsfilter dazu vorgesehen ist, auf eine Anordnung von Pixeln vorbestimmter Anordnungsgröße mit einer Anzahl Pixel angewandt zu werden, wobei wenigstens ein Pixel der vielen Pixel durch ein Rotpixel gebildet wird, das der Farbe Rot zugeordnet ist, wenigstens ein Pixel der vielen Pixel durch ein Blaupixel gebildet wird, das der Farbe Blau zugeordnet ist, und wenigstens ein Pixel der vielen Pixel durch ein Grünpixel gebildet wird, das der Farbe Grün zugeordnet ist und wobei die Anordnung weiterhin Folgendes umfasst:
- Mittel zum Gewichten des Rot- und/oder des Blaupixels durch einen Grünparameter,
- das Umrissrekonstruktionsfilter mit Mitteln zum Summieren der Pixel der Anordnung nach der Gewichtung durch den Grünparameter zu einem einzigen Ausgangspixel,
- Mittel zum Zentrieren des Ausgangspixels in der Anordnung und
- Mittel zur parallelen Anwendung des Umrissrekonstruktionsfilters und des Farbrekonstruktionsfilters, wobei das Farbrekonstruktionsfilter auf Pixel aus der Anordnung angewandt wird.

15. Computerprogrammprodukt, speicherbar auf einem Medium, das von einem Rechensystem ausgelesen werden kann, insbesondere ein Rechensystem einer Kamera, mit einem Softwarecodeteil, der das Rechensystem veranlasst das Verfahren nach Anspruch 1 durchzuführen, wenn das Produkt in dem Rechensystem durchgeführt wird, insbesondere wenn in einem Rechensystem einer Kamera durchgeführt.

16. Rechensystem und/oder Halbleiteranordnung, insbesondere ein Rechensystem einer Kamera zum Durchführen und/oder Speichern eines Computerprogrammproduktes nach Anspruch 15.

17. Kamera mit einem optischen System, einem Bildsensor und einem Rechensystem nach Anspruch 16.

## Revendications

1. Procédé de traitement de signal, dans lequel un signal de capteur d'image est fourni en entrée et dans lequel l'entrée est reconstruite dans un filtre pour établir une sortie pour traitement supplémentaire, le filtre comprenant un filtre de reconstruction de couleur et un filtre de reconstruction de contour, dans lequel :
- l'entrée comprend une pluralité de pixels, et un pixel fournit une valeur de couleur affectée à au moins l'une des couleurs rouge, verte ou bleue, comprenant les étapes suivantes :
- application du filtre de reconstruction à une matrice de pixels ayant une taille de matrice prédéterminée comprenant un certain nombre de pixels, au moins l'un parmi ce nombre de pixels étant formé d'un pixel rouge affecté à la couleur rouge, au moins l'un parmi ce nombre de pixels étant formé d'un pixel bleu affecté à la couleur bleue, et au moins l'un parmi ce nombre de pixels étant formé d'un pixel vert affecté à la couleur verte,
- pondération du pixel rouge et/ou bleu par un paramètre vert, et
- application du filtre de reconstruction de couleur, comprenant la sommation des pixels de la matrice après pondération par le paramètre vert pour donner un pixel de sortie, et
- centrage du pixel de sortie dans la matrice, et
**caractérisé par**
- l'application du filtre de reconstruction de contour en parallèle avec l'application du filtre de reconstruction de couleur aux pixels.

2. Procédé selon la revendication 1, comprenant la multiplication de pixels de la matrice par des coefficients d'un filtre de reconstruction de contour après pondération par le paramètre vert et sommation des pixels multipliés pour donner le pixel de sortie.

3. Procédé selon la revendication 1, comprenant en outre l'application d'un filtre de reconstruction de luminance comprenant la sommation des pixels de la matrice, après pondération par le paramètre vert pour donner un pixel de sortie de reconstruction de luminance.

4. Procédé selon la revendication 1, comprenant la multiplication de pixels de la matrice par des coefficients de filtre de reconstruction de luminance après pondération par le paramètre vert et sommation des pixels multipliés pour donner le pixel de sortie de reconstruction de luminance.

5. Procédé selon la revendication 3, **caractérisé par** la combinaison du filtre de reconstruction de luminance et d'un filtre passe-bas en un filtre unique.

6. Procédé selon la revendication 1, **caractérisé par** l'application du filtre de reconstruction de couleur à une taille de matrice de 3*3 ou de 5*5 .

7. Procédé selon la revendication 3, **caractérisé par** le fait d'appliquer, après un filtre de fausse couleur, un post-filtre ayant une taille de matrice de 2*2, pour positionner un pixel de sortie central d'une petite matrice prédéterminée de pixels verts en phase avec un pixel blanc qui est centré par rapport à la même matrice que celle à laquelle le filtre de reconstruction de luminance a été appliqué.

8. Procédé selon la revendication 3, **caractérisé par** l'application du filtre de reconstruction de contour, en parallèle avec le filtre de reconstruction de luminance et après cela, par l'addition de leurs signaux reconstruits.

9. Procédé selon la revendication 1, **caractérisé par** l'application du filtre de reconstruction de contour à une taille de matrice qui est supérieure à la taille d'une matrice à laquelle le filtre de reconstruction est appliqué.

10. Procédé selon la revendication 1, **caractérisé en ce que** la taille de matrice est de 5*5, de 4*4 ou de 6*6.

11. Procédé selon la revendication 3, **caractérisé par** la fourniture de divers filtres de reconstruction de couleurs pouvant être appliqués, notamment en appliquant un filtre de reconstruction de couleur de 3*3 dans le cas d'un filtre de reconstruction de luminance de 4*4 et/ou en appliquant un filtre de reconstruction de couleur de 5*5 dans le cas d'un filtre de reconstruction de luminance de 6*6.

12. Procédé selon la revendication 1, **caractérisé par** la fourniture de divers filtres de reconstruction de contour pouvant être appliqués, notamment en appliquant un filtre de reconstruction de contour de 4*4 dans le cas d'un filtre de reconstruction de couleur de 3*3 ou en appliquant un filtre de reconstruction de contour de 6*6 dans le cas d'un filtre de reconstruction de couleur de 5*5.

13. Procédé selon la revendication 1, **caractérisé par** l'application d'un filtre de reconstruction de couleur de 3*3 en combinaison avec un filtre de reconstruction de contour de 5*5, notamment en additionnant ensuite un signal à couleur reconstruite et à contour reconstruit pour traitement supplémentaire.

14. Appareil de traitement de signal qui est plus particulièrement apte à exécuter le procédé selon la revendication 1, comprenant :
- un capteur d'image pour fournir un signal de capteur en tant qu'entrée, et
- un filtre pour reconstruire l'entrée afin d'établir une sortie pour traitement supplémentaire, le filtre comprenant un filtre de reconstruction de couleur et un filtre de reconstruction de contour, dans lequel
- l'entrée comprend une pluralité de pixels et un pixel fournit une valeur de couleur affectée à au moins l'une des couleurs rouge, verte ou bleue, **caractérisé en ce que** :
- le filtre de reconstruction est apte à être appliqué à une matrice de pixels ayant une taille de matrice prédéterminée comprenant un certain nombre de pixels, au moins l'un parmi ce nombre de pixels étant formé d'un pixel rouge affecté à la couleur rouge, au moins l'un parmi ce nombre de pixels étant formé d'un pixel bleu affecté à la couleur bleue, au moins l'un parmi ce nombre de pixels étant formé d'un pixel vert affecté à la couleur verte, et l'appareil comprenant en outre :
- un moyen pour pondérer le pixel rouge et/ou bleu par un paramètre vert, et
- le filtre de reconstruction de contour comprenant un moyen pour sommer les pixels de la matrice après pondération par le paramètre vert pour donner un pixel de sortie,
- un moyen pour centrer le pixel de sortie dans la matrice, et
- un moyen pour l'application en parallèle du filtre de reconstruction de contour et du filtre de reconstruction de couleur, le filtre de reconstruction des couleurs étant appliqué à des pixels provenant de la matrice.

15. Programme informatique pouvant être stocké sur un support lisible par un système informatique, notamment un système informatique d'un appareil photo, comprenant une section de code d'un logiciel qui fait en sorte que le système informatique exécute le procédé selon la revendication 1 lorsque le programme est exécuté sur le système informatique, notamment lorsqu'il est exécuté sur un système informatique d'un appareil photo.

16. Système informatique et/ou dispositif à semi-conducteur, et plus particulièrement, système informatique d'appareil photo, pour exécuter sur celui-ci et/ou stocker un programme informatique selon la revendication 15.

17. Appareil photo comprenant un système optique, un capteur d'image, et un système informatique selon la revendication 16.
